# EUROPÄISCHE PATENTSCHRIFT

(11) **EP 1 259 771 B1**
(45) Veröffentlichungstag und Bekanntmachung des Hinweises auf die Patenterteilung: **29.01.2014**
(21) Anmeldenummer: 00944039.7
(22) Anmeldetag: 14.07.2000
(51) Int. Cl.: C08L 27/18, C08L 27/06, C08L 55/02

(54) **PROFIL**
PROFILE
PROFILE

(30) Priorität: 17.07.1999 DE 19933695
(43) Veröffentlichungstag der Anmeldung: 27.11.2002
(73) Patentinhaber: REHAU AG + Co, 95111 Rehau (DE)
(72) Erfinder: GEISSLER, Michael, 95111 Rehau (DE)
(86) Internationale Anmeldenummer: PCT/EP2000/006731
(87) Internationale Veröffentlichungsnummer: WO 2001/006187

(56) Entgegenhaltungen:
- EP-A- 0 106 764
- EP-A1- 0 113 114
- DATABASE WPI Section Ch, Week 198418 Derwent Publications Ltd., London, GB; Class A32, AN 1984-110377 XP002901355 & JP 59 050221 A (KANEBO LTD), 23. März 1984 (1984-03-23)
- DATABASE WPI Section Ch, Week 199504 Derwent Publications Ltd., London, GB; Class A14, AN 1995-027803 XP002901356 & JP 06 313147 A (FUJIKURA LTD), 8. November 1994 (1994-11-08)
- "Brockhaus Enzyklopaedie, 19e Auflage", 1 January 1990 (1990-01-01), 19900101, XP003022834,

## Beschreibung

Die Erfindung betrifft die Verwendung einer Zusammensetzung zur Herstellung von Profilen.

Derartige Profile werden eingesetzt im Bereich der haustechnischen Geräte als Konstruktionselemente, beispielsweise für Schiebedeckel von gewerblichen Kühl- bzw. Gefriertruhen.
Diese Profile aus dem Stand der Technik werden üblicherweise aus thermoplastischen Werkstoffen wie PVC, ABS und ähnlichen extrudierbaren Konstruktionswerkstoffen hergestellt. Dies resultiert aus dem guten Preis-Leistungs-Verhältnis derartiger Materialien, bezogen auf die spezifischen Anforderungen in diesen Anwendungsbereichen.

Diese eingesetzten Materialien weisen jedoch für den Einsatz in zum Beispiel gewerblichen Kühl- bzw. Gefriertruhen ein schlechtes Gleit- und Abriebverhalten auf, sie sind also keine tribologisch relevanten Werkstoffe, welche hierfür eingesetzt werden müssen.

Um diesen Nachteil der Profile des Standes der Technik zu umgehen, ohne auf das günstige Preis-Leistungs-Verhältnis derartiger Materialien zu verzichten, ist man dazu über-gegangen, diese mit einem externen Schmiermittel, wie z. B. ein Silikonöl, zu versehen, um die auftretende Gleitreibung zu reduzieren und damit auch den Abrieb positiv zu beeinflussen.

Nachteilig bei diesen Profilen ist die zeitlich begrenzte Wirkung des externen Schmiermittels. Hier müßten die eingesetzten Profile regelmäßig nachbehandelt werden, was aber keine gängige Praxis ist.
Ein weiterer Nachteil dieser Profile besteht darin, daß durch die extern aufgetragenen Schmiermittel Schmutzpartikel auf den Gleitflächen der Profile gebunden werden, was wiederum die Gleitreibung reduziert und den Abrieb erhöht.

Eine weitere Möglichkeit derartige Nachteile zu umgehen besteht darin, dass in ein Grundprofil ein Zusatzprofil aus einem tribologisch relevanten Werkstoff, wie z. B. Polyamid (PA), Polyoxymethylen (POM) und ähnliche, nachträglich eingebracht werden, da diese Werkstoffe ein bekannt besseres Gleit- und Abriebverhalten aufweisen. Hier ist der entscheidende Nachteil zum einen in der Erhöhung der Kosten derartiger Profile zu sehen, da hier ein zusätzliches Werkzeug für den Extrusionsprozess hergestellt, das Zusatzprofil mit einem zweiten Extruder gefertigt werden muss und dass anschließend ein zusätzlicher Arbeitsgang zum Einbringen des Zusatzprofiles in das Grundprofil, durch beispielsweise Einclipsen, Eindrücken oder Verkleben, erfolgen muss.

Eine weitere denkbare Möglichkeit bestünde darin, die tribologisch relevanten Werkstoffe wie PA, POM und ähnliche mit den Konstruktionswerkstoffen des Grundprofiles im Verfahren der Koextrusion herzustellen. Dies ist jedoch technisch nicht möglich, da die Verarbeitungstemperaturen der tribologisch relevanten Werkstoffe zu unterschiedlich sind zu denen der Konstruktionswerkstoffe des Grundprofiles wie beispielsweise PVC, ABS und ähnliche. Hier können Differenzen von mehr als 100° C auftreten oder keine Verbindung, Verschweißung der tribologisch relevanten Werkstoffe mit den Konstruktionswerkstoffen des Grundprofiles gegeben sein.

Hier setzt die Erfindung ein, die es sich zur Aufgabe gestellt hat, die Nachteile des Standes der Technik zu vermeiden und ein Profil aufzuzeigen, welches Eigenschaften bezüglich des Gleit- und Abriebverhaltens aufweist, die im Bereich tribologisch relevanter Werkstoffe liegen, welches trotzdem wirtschaftlich herstellbar und einfach zu montieren ist, und welches mit herkömmlichen Konstruktionswerkstoffen koextrudierbar ist.

Dies wird erfindungsgemäß durch die Merkmale des Anspruchs 1 gelöst.

Es wird eine Zusammensetzung, bestehend aus Polyvinylchlorid (PVC) oder Acrylnitrilbutadien (ABS) mit wenigstens einem Füllstoff aus Polytetrafluorethylen (PTFE), das in einem Mischungsverhältnis von bis zu 30 Gewichtsprozent zugegeben wird, wobei nur ein Teilbereich oder nur einzelne Teilbereiche des Profils in dieser Zusammensetzung hergestellt sind und die mittlere Korngröße des Füllstoffes Polytetrafluorethylen (PTFE) 4 µm bis 8 µm beträgt, verwendet.

Die Brockhaus Enzyklopädie 1990 beschreibt in ihrem Artikel "Koextrusion" lediglich eine Mehrschichtextrusion von thermoplastischen Kunststoffen unterschiedlicher Eigenschaften und Aufgaben zu Platten, Schlauch- oder Flachfolien.

Die EP 0113114 A1 offenbart gemäß der Ansprüche und sämtlicher Beispiele thermoplastische Massen, die im Wesentlichen bestehen aus:
A) 97 bis 80 Gew.-% Vinyl-Polymerisat und
B) 3 bis 20 Gew.-% eines chlorierten Niederdruck-Polyethylens,
wobei die Komponente B) vor dem Mischen mit A) mit 0,01 bis 2,0 80 Gew.-%, bezogen auf die Komponente B), eines feinteiligen Fluorpolymeren, bspw. PTFE (D3, S. 4, Z. 32), vermischt wird. Bei der beschriebenen thermoplastischen Masse handelt es sich also um ein Gemisch aus zumindest drei Komponenten, deren mögliche Verwendung als Profil angedeutet ist.

Die EP 0 113 114 A1 offenbart ein Profil aus thermoplastischen Werkstoff, wobei das gesamte Profil, und nicht nur ein Teilbereich oder nur einzelne Teilbereiche, ein verbessertes Gleit- und Abriebverhalten aufweist.

Durch Einbringen des Füllstoffes Polytetrafluorethylen (PTFE) -Pulver ist es überraschend möglich, einzelne Teilbereiche eines Profiles so herzustellen, dass die Gleit- und Abriebeigenschaften im Bereich der tribologisch relevanten Werkstoffe liegen.

Die Verwendung von PTFE in Verbundstoffen ist an sich bekannt. So beschreibt die europäische Patentanmeldung EP 0 106 764 A1 die Verwendung eines Verbundmaterials aus einem thermoplastischen Polymer, z.B. Polyvinylchlorid oder Acrylnitril-Butadien-Styrol, in einer Menge von 60 - 98 Gewichts-% und einem Fluorpolymeren wie Polytetrafluorethylen in einer Menge von 2 - 40 Gewichts-% zur Extrusion von Profilen. Die Partikelgröße der verwendeten Polytetrafluorethylen-Teilchen beträgt 0.1 bis 6 µm. Darüber hinaus beschreibt die japanische Patentanmeldung JP 59 050221 A eine chemische Verbindung für Achslager, bestehend aus 30 - 85 Gewichts-% thermoplastischem Kunstharz, 10 bis 60 Gewichts-% Polytetrafluorethylenmehl und 5 bis 60 Gewichts-% Glasfasern, wobei das Verhältnis des Polytetrafluorethylenmehls zur durchschnittlichen Länge der Glasfasern in einem Bereich von 1:10 bis 4:1 liegt. Gemäß dieser Druckschrift weist das Polytetrafluorethylenmehl einen durchschnittlichen Partikeldurchmesser von 10 - 500 µm auf, wobei in den Beispielen Polytetrafluorethylenmehle mit mittleren Partikeldurchmessern von 50 bis 500 µm verwendet werden.

Verwendung der offenbarten Zusammensetzung wirtschaftlich und kostengünstig substituiert werden können.

Ein zusätzlicher Aufwand für externe Schmiermittel entfällt, da die Gleit- und Abriebeigenschaften der beanspruchten Profile auch ohne zusätzlichen Einsatz externer Schmiermittel im Bereich der tribologisch relevanten Werkstoffe liegen.

Das PTFE-Pulver weist gemäß der vorliegenden Erfindung eine mittlere Korngröße 4 bis 8 µm auf. Hierdurch ist eine gute Dispergierbarkeit, Extrudierbarkeit und Wirtschaftlichkeit der herzustellenden Profile gewährleistet.
Durch den Einsatz von thermoplastischen Werkstoffen wie PVC, ABS und ähnlichen ist jedoch mit einer beträchtlichen Kosteneinsparung bei der Verwendung der erfindungsgemäßen Zusammensetzung zu realisieren. Durch die Möglichkeit des Einsatzes des Koextrusionsverfahrens wird nur ein Profil hergestellt, für das demzufolge auch nur ein Extrusionswerkzeug und eine Extrusionsvorrichtung notwendig sind. Weiterhin entsteht vorteilhafterweise kein zusätzlicher Konfektionsaufwand durch Einbringen eines Zusatzprofils auf ein Grundprofil. Ein weiterer Vorteil wird darin gesehen, dass die erfindungsgemäß verwendeten thermoplastischen Werkstoffe ein besseres Preis-Leistungs-Verhältnis aufweisen als mögliche tribologisch relevante Werkstoffe.

Weiterhin kann die Raumform bereits bestehender und im Einsatz befindlicher derartiger Profile so belassen werden, da diese Profile in bereits bestehenden Anwendungen durch Erfindungsgemäß werden Profile hergestellt, die nur an den beanspruchten Teilbereichen ein besseres Gleit- und Abriebverhalten aufweisen.
Somit kann die Raumform des Grundprofiles als solche aus einem kostengünstigen Konstruktionswerkstoff hergestellt sein und der beanspruchte Teilbereich ist aus der erfindungsgemäßen Zusammensetzung hergestellt, wobei es hier auch möglich ist, an der beanspruchten Profilfläche Teilbereiche partiell anzubinden, die aus der erfindungsgemäßen Zusammensetzung bestehen.

Weiterhin wird offenbart die Verwendung einer derartigen Zusammensetzung zur Herstellung von Profilen in allen Bereichen der Möbelindustrie, wo aufgrund der vorherrschenden Beanspruchungen, beispielsweise bei der Führung von Möbelrolladen-profilen in Gleit- bzw. Führungsschienen verbesserte Gleit- und Abriebeigenschaften erforderlich sind.

Im folgenden soll nun in einer die Erfindung nicht beschränkenden Darstellung diese näher beschrieben werden. Es zeigt:

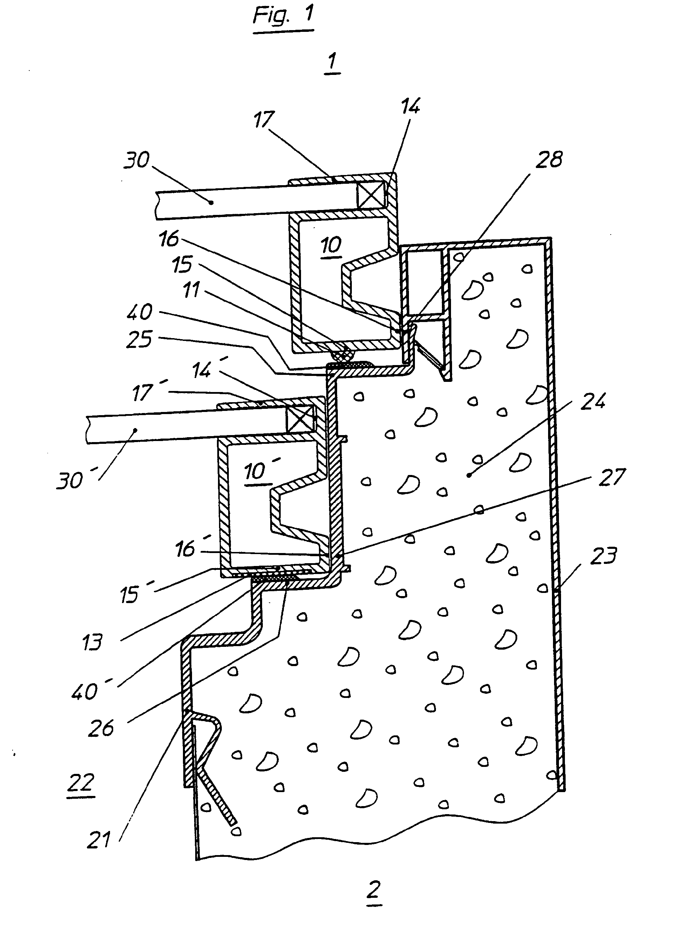

- Figur 1: Schnittdarstellung durch erfindunsgemäße Profile bei der Anwendung von Schiebedeckeln von gewerblichen Kühltruhen

In Figur 1 ist ein Schnitt durch einen Rahmen 2 einer Kühltruhe dargestellt, der durch ein inneres Profil 21 und ein äußeres Profil 23 definiert ist. Zwischen dem inneren Profil 21 und dem äußeren Profil 23 befindet sich die Isolierung 24, welche einen Temperaturausgleich zwischen dem Innenraum 22 der Kühltruhe 1 und der Umgebung verhindern soll. An der Verbindungsstelle des inneren Profils 21 mit dem äußeren Profil 23 ist eine horizontale Profilfläche 25 dargestellt, auf der das Profil 10 aufliegt. Das obere freie Ende 17 des Profiles 10 ist annähernd U-förmig gestaltet, wobei in dem Zwischenraum 14 des U-förmigen Profilendes 17 eine Glasscheibe 30 fixiert ist. Durch diese Glasscheibe 30 ist es möglich, in das innere 22 der Kühltruhe 1 zu schauen. An der Unterseite 15 des Profiles 10 ist eine Gleitnase 11 einstückig an dem Profil 10 angeformt, welche aus der erfindungsgemäßen Zusammensetzung hergestellt sind. Um Produkte aus dem Innenraum 22 der Kühltruhe 1 zu entnehmen, ist es erforderlich, das Profil 10 mit der darin fixierten Glasscheibe 30 auf der horizontalen Profilfläche 25 des inneren Profiles 21 so zu bewegen, daß der Innenraum 22 der Kühltruhe 1 frei zugänglich ist. Die horizontale Profilfläche 25 des inneren Profils 21 weist in dieser Ausführungsform eine Gleitschicht 40 auf, welche aus der erfindungsgemäßen Zusammensetzung besteht.
Somit kann eine optimale Bewegung des Profiles 10 auf der Gleitfläche 40 der horizontalen Profilfläche 25 des inneren Profiles 21 erreicht werden.

In dem hier dargestellten Ausführungsbeispiel verfügt die Kühltruhe 1 über zwei gegenläufig zueinander verschiebbare Glasscheiben 30, 30', welche in den zugehörigen Profilen 10, 10' fixiert sind. Das Profil 10' kann auf der horizontalen Profilfläche 26 des inneren Profiles 21 bewegt werden, so daß das Innere 22 der Kühltruhe 1 frei zugänglich ist oder verschlossen werden kann. Das obere freie Ende 17' des Profiles 10' weist eine U-förmige Öffnung 14' auf, in der die Glasscheibe 30' fixiert ist. Gegenüber dem U-förmigen Aufnahmeraum 14' ist an der Unterseite 15' des Profiles 10' eine Gleitschicht 13 zu erkennen, welche einstückig mit dem Profil 10' verbunden ist. In diesem Ausführungsbeispiel wurde die gesamte Gleitschicht 13 aus der erfindungsgemäßen Zusammensetzung bestehend im Koextrusionsverfahren hergestellt. Die horizontale Profilfläche 26 des inneren Profils 21 weist in dieser Ausführungsform eine Gleitschicht 40' auf, welche aus der erfindungsgemäßen Zusammensetzung besteht. Somit kann eine optimale Bewegung des Profiles 10' auf der Gleitfläche 40' der horizontalen Profilfläche 26 des inneren Profiles 21 erreicht werden. Durch horizontale Verschiebung der in den Profilen 10, 10' fixierten Glasscheiben 30, 30' ist es nun möglich, ohne größeren Kraftaufwand und zusätzliche Belastungen an die Produkte im Inneren 22 der Kühltruhe 1 zu gelangen.
In weiteren hier nicht dargestellten Ausführungsformen ist möglich, auch die Seitenflächen 16, 16' bzw. die vertikalen Profilflächen 27, 28 des inneren Profiles 21 in der erfindungsgemäßen Zusammensetzung herzustellen.
Somit können alle beanspruchten Teilbereiche Gleit- und Abriebeigenschaften im Bereich der tribologisch relevanten Werkstoffe aufweisen.
Es liegt jedoch im Rahmen der Erfindung, daß nur ein beanspruchter Teilbereich in der offenbarten Zusammensetzung herstellbar ist.

## Patentansprüche

1. Profil (10, 10', 21) aus thermoplastischem Werkstoff, wobei nur ein Teilbereich oder nur einzelne Teilbereiche (11, 40, 13, 40') des Profils (10, 10', 21) ein verbessertes Gleit- und Abriebverhalten aufweisen, wobei dem thermoplastischen Werkstoff des Teilbereiches (11, 40, 13, 40') des Profils (10, 10', 21) ein Füllstoff aus Polytetrafluorethylen (PTFE) in einem Mischungsverhältnis von bis zu 30 Gewichtsprozent zugemischt ist, wobei die mittlere Korngröße des Füllstoffes Polytetrafluorethylen (PTFE) 4 µm bis 8 µm beträgt und wobei das Profil (10, 10', 21) in an sich bekannter Weise mittels Koextrusion des thermoplastischen Werkstoffes des Profils (10, 10', 21) mit dem gefüllten thermoplastischen Werkstoff des Teilbereiches (11, 40, 13, 40') des Profils (10, 10', 21) herstellbar ist.

## Claims

1. Profile (10, 10', 21) consisting of thermoplastic material, wherein only a partial region or only individual partial regions (11, 40, 13, 40') of the profile (10, 10', 21) have improved sliding and abrasive properties, wherein a filler consisting of polytetrafluoroethylene (PTFE) is admixed to the thermoplastic material in the partial region (11, 40, 13, 40') of the profile (10, 10', 21) in a mixture ratio of up to 30% by weight, wherein the mean grain size of the polytetrafluoroethylene (PTFE) filler is 4 µm to 8 µm, and wherein the profile (10, 10', 21) can be produced in a manner known per se by means of coextrusion of the thermoplastic material of the profile (10, 10', 21) with the filled thermoplastic material in the partial region (11, 40, 13, 40') of the profile (10, 10', 21).

## Revendications

1. Profilé (10, 10', 21) en matériau thermoplastique, dans lequel seulement une région partielle ou seulement des régions partielles individuelles (11, 40, 13, 40') du profilé (10, 10', 21) présentent un comportement de glissement et d'abrasion amélioré, dans lequel une charge constituée de polytétrafluoroéthylène (PTFE) est mélangée dans un rapport de mélange de jusqu'à 30 % en poids au matériau thermoplastique de la région partielle (11, 40, 13, 40') du profilé (10, 10', 21), dans lequel la granulométrie moyenne de la charge de polytétrafluoroéthylène (PTFE) est de 4 µm à 8 µm et dans lequel le profilé (10, 10', 21) peut être fabriqué de manière connue en soi par coextrusion du matériau thermoplastique du profilé (10, 10', 21) avec le matériau thermoplastique chargé de la région partielle (11, 40, 13, 40') du profilé (10, 10', 21).
